# EUROPEAN PATENT SPECIFICATION

(11) **EP 1 973 207 B1**
(45) Date of publication and mention of the grant of the patent: **08.12.2010**
(21) Application number: 07425167.9
(22) Date of filing: 21.03.2007
(51) Int. Cl.: H01T 4/16, H01T 1/00, H01T 4/08

(54) **Overvoltage protection device**
Überspannungsschutzvorrichtung
Dispositif de protection de surtension

(43) Date of publication of application: 24.09.2008
(73) Proprietor: Phase Motion Control S.p.A., 16141 Genova (IT)
(72) Inventor: Venturini, Marco, 16145 Genova (GE) (IT)
(74) Representative: Monti, Umberto

(56) References cited:
- DE-C- 297 892
- DE-C- 938 078
- FR-A- 2 012 100
- GB-A- 2 237 149
- JP-A- 58 133 147

## Description

The present invention refers to a device for protecting electric equipments, particularly brushless motors, from overvoltages, as well as to an electric motor equipped with such protection.

The invention will be disclosed in the following with particular reference to the overvoltage protection of a so-called defluxed brushless motor, but this is not to be construed as a limitation of the invention.

In the permanent magnet (PM) brushless motors known as "defluxed", in order to increase the speed beyond the so-called "knee" speed (corresponding to the speed at which the motor electromotive force is equal to that available at the motor drive) there are known techniques capable of reversibly reducing the field produced by the permanent magnets fitted onto the rotor. Briefly stated, the electronic drive controlling the motor applies to the motor windings a suitable DC current, counteracting the rotor magnetic field, which generates a magnetic field opposed to that of the permanent magnets. This way it becomes possible to reduce the electromotive force at the motor terminals, and the motor can be made to rotate at a higher speed.

In this way it is possible to achieve an operation area at constant power for a PM motor, in which the output voltage is constant and equal to the maximum available voltage since in correspondence to each speed increase of the motor the drive electronics generate a corresponding increase of the "demagnetizing" current. The term "defluxable" is to be meant as indicating a motor adapted to this type of operation.

If the available current is constant and the voltage is constant, even the power transferred to the load is constant and independent from the motor speed rotation, which means that to each increase of the speed there is a corresponding reduction of the motor torque. A motor working at a constant power is an useful and sought after quality in applications such as mandrels of machine tools and electric traction equipments; the extended working range is one of the merit parameters of the most evolved motors.

A drawback of this known technique derives from the fact that, in case the motor drive system should go into an alarm condition or would otherwise fail while the motor operates under defluxed conditions, the current opposing the field of the permanent magnets would abruptly disappear turning the motor into a voltage generator with an electromotive force higher than that of the mains depending on the ratio between the motor instant speed and said knee speed.

In order to prevent such a high voltage that could not only destroy the drive but also be dangerous for the personnel, a protection device is disposed between the drive and the motor, that provides to short-circuiting the motor phases between each other in presence of a voltage quite higher than the mains voltage at the terminals of the motor, the condition being regarded as an indication of a faulty operation of the drive.

Although the intervention of such protecting device is generally reliable and sufficiently prompt, nevertheless there would be a probabilistically non-zero risk for the personnel in case of a failure of the protecting device incorporated in the drive. In accordance with the state of the art an exposure of the personnel to overvoltages cannot be excluded and could be quite high and dangerous.

To solve this problem is not possible to use the conventional devices for overvoltage protection, such as zinc oxide varistors or power zener diodes, since the involved energy is not predictable in advance and is anyhow quite large, roughly corresponding to the inertial energy of a large motor rotating at high speed and to that of its load. In any case, this current would be of the order of at least a few tens of kJs and the conventional protection devices are only capable of handling energies in the order of tens or hundreds of Js before being destroyed. The gas discharge devices suffer from the same limitation, and moreover are too much bulky for being used in the high power density applications typical of the brushless motors rotating at high speed.

GB 1 580 321 discloses a lightning diverter strip to be applied to the surface of an aircraft, comprising a polyester tape and a coating or layer of uniformly dispersed powdered aluminum. The strip is insulating, but provides for a capacitive short-circuit to lightning currents.

US 2 899 657 discloses a so-called "coherer" device comprising a metal powder disposed between a couple of electrodes (one of which connected to the earth). When the voltage across the electrodes overcomes a predetermined threshold the metal powder melts forming a conductive path. The powder can be mechanically returned into a non-conductive condition.

US 7 166 968 B2 discloses a DC series connected light string with diode array shunt and refers mentions several references to arrangements for maintaining or testing the continuity of a string of lamps.

DE 938 078 discloses an overvoltage arrester providing pairs of thin metallised paper sheets separated by a plastic sheet having a large number of holes, in which when an overvoltage is applied between two consecutive metallised sheets, an arc is formed through a number of said holes and the two metallizations are vaporized dissipating the overvoltage energy, and the device becomes again an insulator.

It is an object of the present invention to provide for an additional protection against high energy overvoltages in electric equipments, and particularly in defluxed (or defluxable) PM brushless motors that is extremely reliable, adapted to effectively handling the large power typical of electrical machines rotating at high speed, while at the same time having an economic construction and a reduced size.

Another object of the invention is to provide a defluxable PM brushless motor incorporating such a protection device whereby the motor can be operated in an intrinsically safe manner at any desired rotation speed.

The invention achieves these objects through a protection device against overvoltage of electric equipments and through a defluxed PM brushless motor as claimed in claims 1 and 7.

Further advantageous characteristics are recited in the dependent claims.

The invention will now be disclosed with reference to the attached drawings which illustrate preferred but not limiting embodiments of the invention, in which:
- Fig. 1 is an exploded perspective view of a protection device according to the invention;
- Fig. 2 is a transverse cross-section view of the protection device of Fig. 1;
- Fig. 3 is a partial transverse cross-section view of a brushless motor incorporating protection devices according to the invention; and
- Fig. 4 illustrates an end block to which the three wires of a protected motor are connected according to the invention.

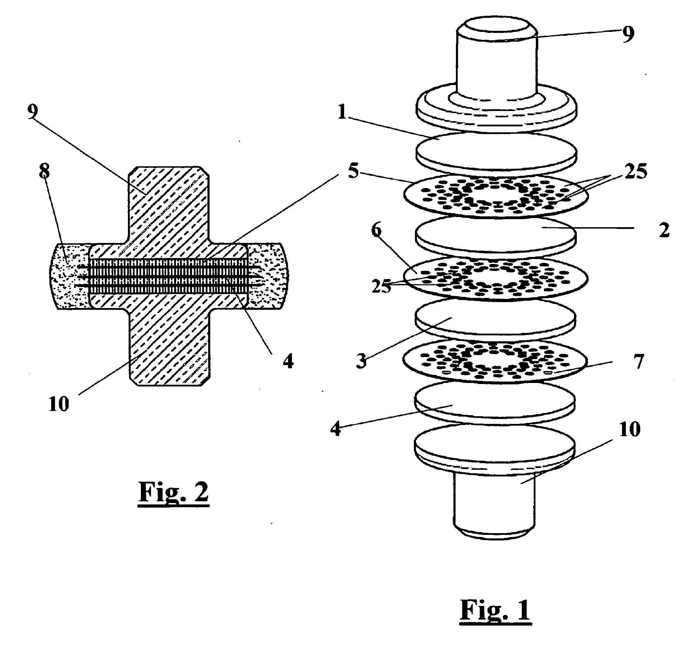

According to an actually preferred embodiment illustrated in Fig. 1, a device as claimed in invention comprises two or more discs indicated in Fig. 1 by the numeral references 1, 2, 3, 4 and made of a conductive metal material capable of melting in a predetermined temperature range, such discs being stacked with corresponding thin discs or spacers 5, 6, 7 of predetermined thickness that are made of an insulating material and are temperature resistant, at least in the above mentioned range.

The melting range of the metal discs (i.e. the range in which the metal can flow) is comprised between 400 and 700°C, and preferably is from 500 to 600°C. The metal materials are for instance lead, tin, antimony, nomex or alloys thereof.

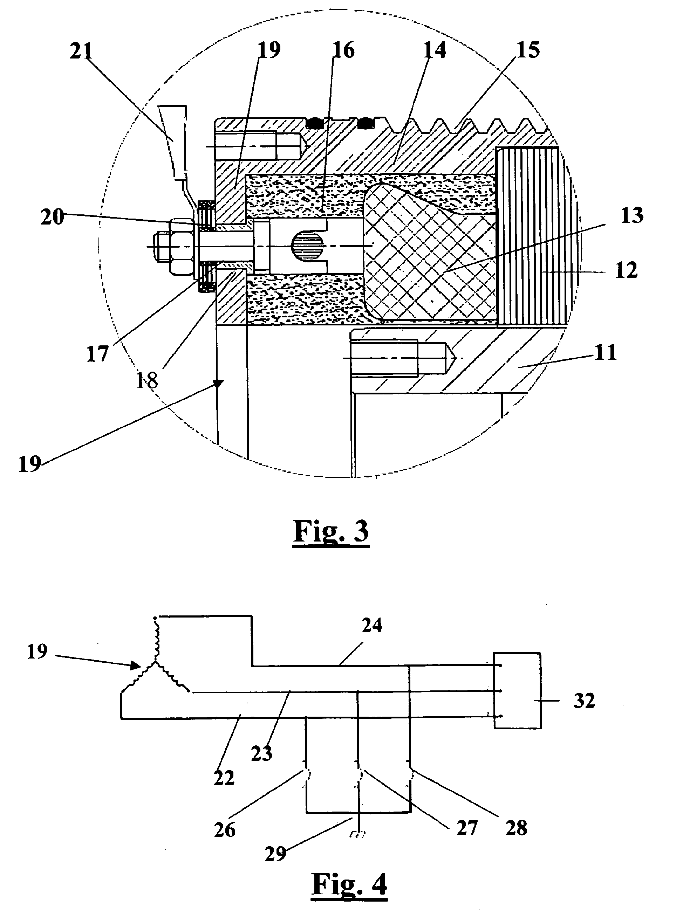

The insulating material of the spacing discs 5, 6, 7 is capable of withstanding high pressures, and has a dielectric rigidity much greater that that of the air. Preferably such discs are realized in mica, mylar or kapton. In these discs it is formed a plurality of holes 25, with small diameters (or more generally transverse dimensions) in comparison with the thickness of the insulator, and however such as to maintain a substantially constant distance between the pairs of stacked consecutive discs of conductive material 1, 2, 3, 4 also in presence of remarkable pressures. Preferably such holes are concentrically disposed along an annular area, and both the spacing insulating discs 5, 6, 7 and the conductive discs 1, 2, 3 and 4 are provided with a central hole (not shown in the embodiment of Fig.s 1 and 2) for the passage of an insulating support member as shown in Fig. 3.

More particularly, the sizes of the holes are such as to anyhow prevent that the distance between two consecutive conductive discs becomes appreciably shorter than the thickness of the sandwiched insulating disc.

The device further includes an outer insulation 8, for example of epoxy resin making the device wheathertight, and it is preferably equipped with metal terminals 9, 10 for the electric connection to the circuit in which it is fitted.

The operation of the protection device- that operates like a sort of voltage fuse - can be viewed as the dual of a conventional fuse. An ideal conventional fuse is a device having a null resistance that, when subjected to an excessive current, turns itself into an insulator, while the voltage fuse of the invention is an insulator that, when subjected to an excessive voltage, turns itself into a short-circuit.

In fact, when the voltage across the terminals of the device of the invention exceeds the breakthrough voltage in air as determined by the cumulative thickness of the insulating spacers 5, 6, 7, it triggers an arc between the metal discs, locally melting them to form bridges of conductive material (through the holes 25) and transforming the device into a short-circuiting element.

For a device having an intervention threshold between 1000 and 2000 Volts, the thickness of the insulating spacers, in a twos spacers system, is of the order of 120-150 µms for each spacing disc. As a matter of fact, after the discharge, the metal discs are connected by bridges of fused material filling the holes provided in the insulating material. Once such metal material has filled the holes in the insulator, the disc stack becomes a mere low resistivity conductor, whereby the passage of high currents even through the bridges does not cause an appreciable heating.

This way the arc between the disc pairs subsists for a very short time, in the order of few tens of milliseconds, thanks to the low melting point of the metal from which the discs are made and to the very small volume to be filled. The remaining device, of a quite larger mass when compared to that subjected to melting, does not show an appreciable increase of temperature whereby the melting remains confined to the holes in the spacers. Thus the remaining structures do not suffer any visible modification. The defluxable brushless motors in which the invention is particularly advantageous, have a pretty high series impedance that renders their short-circuit current quite similar to the nominal current of the motor: as a result the short-circuit of such motors is entirely safe and does not involve large overcurrents.

In the device of the invention, the energy associated to the discharge, corresponding to the kinetic energy of the motor and the load, is not dissipated in the protection device (which has no appreciable losses being a short-circuit), but rather is gradually absorbed by the losses of the decelerating motor, a situation that is quite acceptable in view of the machine size. In other words the device of the invention operates without absorbing the overvoltage energy when a predetermined electric voltage is applied between the conductive layers.

The intervention voltage of the device is determined by the number and by the thickness of the insulating sheets, while the short-circuit current the device can safely withstand is determined by the surface of the exposed holes and therefore by the overall surface of the device. The operation of the device can be checked in advance in non destructive way by using testers for measuring the insulation that are current limited so as to prevent the melting of the electrodes.

With reference to Fig. 3, it will now be disclosed a non limiting construction of a defluxed brushless motor that is intrinsically safe.

A high power and high speed brushless motor manufactured in accordance with the modern techniques comprises a rotor 11 carrying a given number of permanent magnets and a laminated member 12 inside which the stator coils 13 (generally three-phase coils) are housed. The construction further comprises a motor housing 14, on the outside surface of which there are generally formed grooves 15 used as channels for the cooling liquid. A motor built in this manner is generally embedded in a suitable insulating material 16, generally epoxy resin incorporating a heat conducting filler.

According to the disclosed embodiment of the invention, rather than being directly brought outside, the connections of the motor coils to the motor drive circuit (not shown in Fig. 3), are soldered to threaded members 17 that in turn are secured to the motor side by an insulating member 18 passing through a metal flange 19 which is a component connected to the earth. Namely the metal flange 19 is electrically connected to the rest of the machine so that it behaves like a grounded conductor.

In an advantageous embodiment of the protection device 20 according to the invention is realized with a toroidal shape. In this embodiment both the metal discs and the insulating spacers are ring-shaped that is like discs provided with central holes. Such a protection device 20 is fitted between the threaded members 17 of the motor and is therefore located between the member portion to which a voltage is applied and the ground plane of the motor. The connection of the motor coils to the drive circuit is accomplished through plugs 21 fixed on said threaded members 17. When an overvoltage occurs, the discharge causes a localized melting of the metal discs through the insulating discs of the device 20, and the motor terminal is short-circuited to ground thus protecting the operator. The plug 21 can be later removed from the motor and the melted protection device 20 can be replaced by a new one.

In applications where the available space is too small for allowing the integration of the voltage fuses on the motor terminals, the protection can be realized on a terminal block, as schematically shown in Fig. 4, onto which the three motor connections 22, 23, 24 between the motor 19 and the drive 32 are brought which connections are connected to a common ground terminal 30 through protection devices 26, 27, 28 according to the invention. In this case it is preferable that the protection is located as much as possible next to the motor to prevent possible risks due to the interruption of the connection between the motor and protecting devices.

Although the invention has been illustrated with reference to preferred embodiments thereof, the same is generally susceptible of other applications and changes that fall within the scope of the appended claims.

## Claims

1. A device for protecting electric equipments against overvoltages, comprising a stacked structure formed by one or more layers (5, 6, 7) of insulating material with of predetermined thickness, said or each layer being sandwiched between two layers (1, 2, 3, 4) of an electrically conductive material; and two terminals (9, 10) for the electric connection of the two end conductive layers to the electric equipment to be protected;
said layer(s) of insulating material (5, 6, 7) being provided with one or more openings (25) to allow an electric discharge and the local melting of said conductive material in correspondence of said openings (25), when a predetermined voltage is applied between two consecutive conductive layers (1, 2, 3, 4),
**characterized in that** said conductive material is a metal material, meltable in a temperature range of 400-700°C, and that said of insulating material is temperature-resistant and with said predetermined thickness (txt) has a dielectric rigidity much higher than that of the air, whereby when said predetermined voltage is exceeded, the arc between two consecutive conductive layers locally melt said consecutive conductive layers and form bridges of conductive material through said holes (25), thus permanently short-circuiting said consecutive conductive layers (1, 2, 3, 4).

2. A protection device as claimed in claim 1, **characterized in that** said insulating layers (5, 6, 7) and conductive layers (1, 2, 3, 4) are formed as discoid elements.

3. A protection device as claimed in claim 1 or 2, **characterized in that** said conductive material is selected from the group consisting of lead, tin, antimony or alloys thereof, and that said insulating material is select from the group consisting of mica, mylar, kapton, nomex or derivatives thereof.

4. A protection device as claimed in claims 2 or 3, **characterized by** that both said insulating discoid elements (5, 6, 7) and conductive discoid elements (1, 2, 3, 4) are provided with a central hole for the passage of an insulating support member.

5. A protection device as claimed in preceding claims, **characterized in that** it comprises an outer wheatertight insulation (8), of an insulating material such as epoxy resin.

6. Use of a protection device according to one any of claims 1 to 5 in an electric motor operating at high speed.

7. A defluxable PM brushless motor incorporating at least one protection device against overvoltages as claimed in any of claims 1-5.

8. A defluxable PM brushless motor **characterized by** providing overvoltage protection devices as claimed in any of claims 1-5, positioned in the connection between the motor coils and the motor drive circuit, and mounted on insulating supports (18).

9. A brushless motor as claimed in claim 8, **characterized in that** said protection devices (20) are fitted to insulating supports (18) passing through a metal component (19) connected to ground, said insulating supports (18) being provided with threaded members (17) to which the motor coils connections are soldered.

10. A defluxable PM brushless motor, incorporating overvoltage protection devices as claimed in any of claims 1 - 5, **characterized in that** said protection devices (26, 27, 28) are disposed along the cabling (22, 23, 24) connecting the motor (19) to its associated drive system (32).

## Patentansprüche

1. Vorrichtung zum Schützen elektrischer Einrichtungen gegen Überspannungen, die eine gestapelte Struktur, die durch eine oder mehrere Schichten (5, 6, 7) isolierenden Werkstoffes von vorgegebener Dicke gebildet ist, wobei sich die oder jede Schicht zwischen zwei Schichten (1, 2, 3, 4) eines elektrisch leitfähigen Werkstoffs befindet, und zwei Anschlüsse (9, 10) für die elektrische Verbindung der zwei leitfähigen Endschichten mit der zu schützenden elektrischen Einrichtung umfasst;
wobei die Schicht(en) isolierenden Werkstoffs (5, 6, 7) mit einer oder mehreren Öffnungen (25) versehen sind, um eine elektrische Entladung und das örtliche Schmelzen des leitfähigen Werkstoffs in Übereinstimmung mit den Öffnungen (25) zu ermöglichen, wenn eine vorgegebene Spannung zwischen zwei aufeinanderfolgenden leitfähigen Schichten (1, 2, 3, 4) angelegt ist,
**dadurch gekennzeichnet, dass** der leitfähige Werkstoff ein Metallwerkstoff ist, der in einem Temperaturbereich von 400-700 °C schmelzfähig ist, und dass der isolierende Werkstoff temperaturbeständig ist und mit der vorgegebenen Dicke (txt) eine viel höhere Durchschlagsfestigkeit als jene der Luft aufweist, wodurch, wenn die vorgegebene Spannung überschritten ist, der Lichtbogen zwischen zwei aufeinanderfolgenden leitfähigen Schichten die aufeinanderfolgenden leitfähigen Schichten örtlich schmilzt und Brücken leitfähigen Werkstoffs durch die Löcher (25) bildet, womit die aufeinanderfolgenden leitfähigen Schichten (1, 2, 3, 4) dauerhaft kurzgeschlossen sind.

2. Schutzvorrichtung nach Anspruch 1, **dadurch gekennzeichnet, dass** die isolierenden Schichten (5, 6, 7) und leitfähigen Schichten (1, 2, 3, 4) als scheibenförmige Elemente gebildet sind.

3. Schutzvorrichtung nach Anspruch 1 oder 2, **dadurch gekennzeichnet, dass** der leitfähige Werkstoff aus der Gruppe ausgewählt ist, die aus Blei, Zinn, Antimon oder Legierungen daraus besteht, und dass der isolierende Werkstoff aus der Gruppe ausgewählt ist, die aus Glimmer, Mylar, Kapton, Nomex oder Derivaten davon besteht.

4. Schutzvorrichtung nach Anspruch 2 oder 3, **dadurch gekennzeichnet, dass** sowohl die isolierenden scheibenförmigen Elemente (5, 6, 7) als auch die leitfähigen scheibenförmigen Elemente (1, 2, 3, 4) mit einer mittleren Bohrung für den Durchtritt eines isolierenden Halteelements versehen sind.

5. Schutzvorrichtung nach vorhergehenden Ansprüchen, **dadurch gekennzeichnet, dass** sie eine äußere wetterfeste Isolierung (8) eines isolierenden Werkstoffs wie z.B. Epoxidharz umfasst.

6. Verwenden einer Schutzvorrichtung nach einem der Ansprüche 1 bis 5 in einem Elektromotor, der mit hoher Drehzahl arbeitet.

7. Entregbarer kollektorloser PM-Motor, der mindestens eine Schutzvorrichtung gegen Überspannungen nach einem der Ansprüche 1-5 einbezieht.

8. Entregbarer kollektorloser PM-Motor, **gekennzeichnet durch** Bereitstellen von Überspannungs-Schutzvorrichtungen nach einem der Ansprüche 1-5, die in der Verbindung zwischen den Motorwicklungen und der Motoransteuerschaltung positioniert sind und auf isolierenden Halterungen (18) montiert sind.

9. Kollektorloser Motor nach Anspruch 8, **dadurch gekennzeichnet, dass** die Schutzvorrichtungen (20) auf isolierenden Halterungen (18) angebracht sind, die durch ein Metallbauteil (19) hindurchtreten, das mit Masse verbunden ist, wobei die isolierenden Halterungen (18) mit Gewindeelementen (17) versehen sind, an die die Motorwicklungs-Verbindungen angelötet sind.

10. Entregbarer kollektorloser PM-Motor, der Überspannungs-Schutzvorrichtungen nach einem der Ansprüche 1-5 einbezieht, **dadurch gekennzeichnet, dass** die Schutzvorrichtungen (26, 27, 28) entlang der Verkabelung (22, 23, 24) angeordnet sind, die den Motor (19) mit seinem zugeordneten Ansteuersystem (32) verbindet.

## Revendications

1. Dispositif pour protéger des équipements électriques contre des surtensions, comprenant une structure empilée formée par une ou plusieurs couches (5, 6, 7) de matériau isolant d'une épaisseur prédéterminée, ladite couche ou chaque dite couche étant prise en sandwich entre deux couches (1, 2, 3, 4) d'un matériau électriquement conducteur ; et deux bornes (9, 10) pour la connexion électrique des deux couches conductrices d'extrémité à l'équipement électrique à protéger ; ladite couche ou lesdites couches de matériau isolant (5, 6, 7) étant munies d'une ou plusieurs ouvertures (25) pour permettre une décharge électrique et la fusion locale dudit matériau conducteur en correspondance avec lesdites ouvertures (25), lorsqu'une tension prédéterminée est appliquée entre deux couches conductrices consécutives (1, 2, 3, 4),
**caractérisé en ce que** ledit matériau conducteur est un matériau métallique pouvant fondre dans une plage de température de 400 °C à 700 °C, et **en ce que** ledit matériau isolant est résistant à la température et avec ladite épaisseur prédéterminée (txt) a une rigidité diélectrique largement supérieure à celle de l'air, de telle manière que lorsque ladite tension prédéterminée est dépassée, l'arc entre deux couches conductrices consécutives fait fondre lesdites couches conductrices consécutives et forme des ponts de matériau conducteur à travers lesdits trous (25), ce qui met lesdites couches conductrices consécutives (1, 2, 3, 4) en court-circuit permanent.

2. Dispositif de protection selon la revendication 1, **caractérisé en ce que** lesdites couches isolantes (5, 6, 7) et lesdites couches conductrices (1, 2, 3, 4) sont formées en tant qu'éléments discoïdes.

3. Dispositif de protection selon la revendication 1 ou 2, **caractérisé en ce que** ledit matériau conducteur est sélectionné dans le groupe se composant du plomb, de l'étain, de l'antimoine ou d'alliages de ceux-ci, et **en ce que** ledit matériau isolant est sélectionné dans le groupe se composant de mica, de mylar, de kapton, de nomex ou de dérivés de ceux-ci.

4. Dispositif de protection selon la revendication 2 ou 3, **caractérisé en ce que** lesdits éléments isolants discoïdes (5, 6, 7) et lesdits éléments conducteurs discoïdes (1, 2, 3, 4) sont munis d'un trou central pour le passage d'un organe de support isolant.

5. Dispositif de protection selon l'une quelconque des revendications précédentes, **caractérisé en ce qu'**il comprend une isolation étanche extérieure (8) d'un matériau isolant comme de la résine époxy.

6. Utilisation d'un dispositif de protection selon l'une quelconque des revendications 1 à 5 dans un moteur électrique fonctionnant à haut régime.

7. Moteur sans balai à aimants permanents défluxable incorporant au moins un dispositif de protection contre des surtensions selon l'une quelconque des revendications 1 à 5.

8. Moteur sans balai à aimants permanents défluxable **caractérisé par** la fourniture de dispositifs de protection contre des surtensions selon l'une quelconque des revendications 1 à 5, positionnés dans la connexion entre les bobines de moteur et le circuit d'entraînement de moteur, et montés sur des supports isolants (18).

9. Moteur sans balai selon la revendication 8, **caractérisé en ce que** lesdits dispositifs de protection (20) sont montés sur des supports isolants (18) traversant un composant métallique (19) connecté à la masse, lesdits supports isolants (18) étant munis d'organes filetés (17) sur lesquels les connexions des bobines de moteur sont soudées.

10. Moteur sans balai à aimants permanents défluxable, incorporant des dispositifs de protection contre des surtensions selon l'une quelconque des revendications 1 à 5, **caractérisé en ce que** lesdits dispositifs de protection (26, 27, 28) sont disposés le long du câblage (22, 23, 24) connectant le moteur (19) à son système d'entraînement associé (32).
